# EUROPEAN PATENT APPLICATION

(11) **EP 3 913 268 A1**
(43) Date of publication of application: **24.11.2021**
(21) Application number: 20305527.2
(22) Date of filing: 20.05.2020
(51) Int. Cl.: F16L 9/19, F16L 11/127, F16L 11/22, H01B 7/04, H01B 9/06, C22C 9/06, C22C 9/08, C22C 21/00, C22C 38/00, C22C 38/44

(54) **AN UMBILICAL CABLE SUITED FOR TRANSPORTING HYDROGEN GAS**

(71) Applicant: Nexans, 92400 Courbevoie (FR)
(72) Inventor: JOHANSON, Audun, 0653 Oslo (NO)
(74) Representative: Ipsilon

(57) **Abstract**

The present invention relates to an umbilical cable suited for transporting hydrogen gas, comprising an electric conductor (2), and a tube (3) for transporting hydrogen having a tube wall (4) made of a material resistant to hydrogen embrittlement.

## Description

The present invention relates to an umbilical cable suited for transporting hydrogen gas.

### Background

Electric power and hydrogen gas are both believed to play a vital role in the decarbonisation of the economy to meet the targets of the Paris Agreement.

Offshore transportation of hydrogen as an energy storage medium is proposed as one of the key elements technology challenges for future energy infrastructure. This could be required for production of hydrogen in conjuncture with offshore wind facilities, storage on seabed or point-to-point transfer.

### Prior art

An umbilical cable is, as the analogy to the umbilical cord implies, a cable which transports required consumables between a source and recipient. The umbilical cable is typically a bundle of cables and conduits enclosed in an over-sheath and may transport both chemical compounds, hydraulic power, electric power and/or digital data in its cables and/or conduits.

Present subsea umbilical cables typically comprise conduits made of various corrosion resistant steels. However, steel, especially high-strength steel, is known to be subject to hydrogen embrittlement which is adsorption of hydrogen atoms/- molecules in the metal reducing its ductility and making the metal more brittle. However, umbilical cables may be subject to various mechanical loading including hydrostatic water pressure, internal pressure according to the substance it transfers, bending and tensioning during manufacture and installation, and dynamic flexing for long periods of time. This requiring excellent mechanical strength, ductility and fatigue properties of the materials in the umbilical. It is generally a challenge to obtain a material with sufficient high strength while being insensitivity to hydrogen.

It is known that oxygen free copper generally does not suffer hydrogen embrittlement and is suitable for use in hydrogen gas [Ref. 1, page 12].

Ogawa et al. [Ref 2] have investigated the tensile, fatigue and fracture toughness of a beryllium-copper alloy in high-pressure hydrogen and found that the alloy showed no hydrogen-induced degradation. Yamabe et al. [Ref. 3] have investigated a precipitation-hardened copper-beryllium alloy having a tensile strength of 1400 MPa at room temperature and an excellent hydrogen embrittlement resistance. EP 3 434 961 A1 teaches use of CuBe or CuTi alloys in a heat-exchanger for cooling hydrogen gas in a hydrogen gas filling apparatus.

EP 2 706 539 B1 discloses the use of various alloys, including CuNi-alloys having between 10 and 50 wt% Ni, in a fatigue resistant water barrier layer/inner sheathing around a core of dynamical power cables. EP 3 438 993 A1 teaches use of CuNi-alloys having from 6 to 20 wt% Ni in a fatigue resistant water barrier layer in submarine dynamical power cables.

Sudarshan et al. [Ref. 4] has studied the fatigue response of 70-30 Cu-Ni alloys containing less than 1 % Fe in 1 atmosphere gaseous hydrogen and humid air environments and found substantial decreases in fatigue life in dry hydrogen and moist air environments as compared to dry helium.

### Objective of the invention

The main objective of the invention is the provision of a umbilical cable comprising a tube for transportation of hydrogen.

### Description of the invention

In a first aspect, the present invention relates to an umbilical cable for transportation of electric power and hydrogen, characterised in that the umbilical cable (1) comprises:
an electric conductor (2), and
a tube (3) for transporting hydrogen having a tube wall (4) made of a material resistant to hydrogen embrittlement.

The tube wall (4) may be made of any material being found resistant to hydrogen embrittlement according to ISO 11114-4:2017.

In one embodiment, the tube wall (4) is monolithic consisting of a single material.

In another one embodiment, the tube wall (4) may be at least a dual-layered wall wherein the inner layer is made of the material resistant to hydrogen embrittlement. The one or more additional layers may advantageously be a reinforcing material such as e.g. stainless steel.

In a further embodiment, the tube may further comprise a sheathing/over-layer in the form of a coaxial tube overlaying the tube (3), a pressure armouring or transversal armouring made of stainless steel laid onto the tube wall (4).

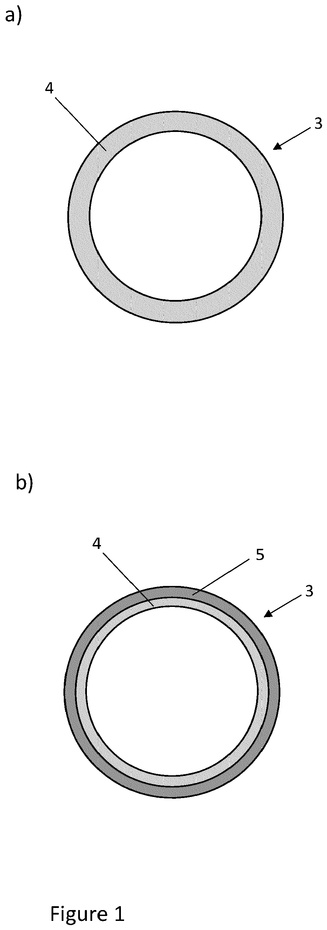

An example of a single-layered monolithic tube wall is given schematically in figure 1a). Figure 1b) illustrates schematically another embodiment of the tube (3) where the tube wall (4) is a dual layer wall where the inner layer facing the interior of the tube (3) is made of a material resistant to hydrogen embrittlement and an outer layer (5) which typically may be an armouring of stainless steel.

Examples of hydrogen embrittlement resistant materials suited for use as the tube wall (4) includes or a 25Cr-6Mo-5Ni duplex stainless steel, an austenitic stainless steel, an aluminium alloy, e.g. wrought alloy which can be formed into a tube and welded such as AAlxxx through AA7xxx series according to the Aluminium Association Standard, a polymer-liner, e.g. a thermoplastic such as high-density polyethylene (HDPE), or a copper alloy.

In one embodiment, the austenitic stainless steel may preferably be a steel classified as the 200 or 300 series according to the American Iron and Steel Institute (AISI), preferably a 316 steel. The 300 series stainless steels achieve their austenitic structure primarily by its nickel content while 200 series stainless steels substitute some of its nickel content with manganese and nitrogen.

In one embodiment, the copper alloy may preferably be a copper alloy containing:
from 1.0 to 30.0 wt% Ni,
from 0.0 to 5.0 wt% Si,
from 0.0 to 10.0 wt% Mn,
from 0.0 to 5.0 wt% Al,
from 0.0 to 1.5 wt% Fe,
from 0.0 to 1.0 wt% Mg,
from 0.0 to 1.0 wt% Zn,
from 0.0 to 1.0 wt% Co,
from 4.0 to 10.0 wt% Sn,
from 0.0 to 2.0 wt% Cr,
from 0.0 to 1.5 wt% Zr,
from 0.0 to 2.0 wt% Nb,
and the rest being Cu and unavoidable impurities.

In one embodiment, the copper alloy may preferably be a Ni-Si-Cu alloy containing:
from 1.0 to 10.0 wt% Ni,
from 0.25 to 3.0 wt% Si,
from 0.0 to 0.5 wt% Mn,
from 0.0 to 0.5 wt% Mg,
from 0.0 to 2.0 wt% Cr,
from 0.0 to 2.0 wt% Co,
and the rest being Cu and unavoidable impurities.

In a further embodiment, the Ni-Si-Cu alloy may contain from 6.0 to 8.0 wt% Ni, from 1.5 to 2.5 wt% Si, from 0.7 to 1.2 wt% Cr, and the rest being Cu and unavoidable impurities.

In a further embodiment, the Ni-Si-Cu alloy may contain from 2.2 to 4.2 wt% Ni, from 0.25 to 1.2 wt% Si, from 0.05 to 0.30 wt% Mg, and the rest being Cu and unavoidable impurities.

In a further embodiment, the Ni-Si-Cu alloy may contain from 1.0 to 5.0 wt% Ni, from 0.50 to 2.0 wt% Si, 0.1 wt% Mg, from 0.8 to 2.0 wt% Co, and the rest being Cu and unavoidable impurities.

In a further embodiment, the Ni-Si-Cu alloy may contain from 2.0 to 3.5 wt% Ni, from 0.3 to 0.7 wt% Si, and the rest being Cu and unavoidable impurities.

In one embodiment, the copper alloy may preferably be a Ni-Sn-Cu alloy containing:
from 5.0 to 20.0 wt% Ni,
from 0.0 to 0.5 wt% Mn,
from 4.0 to 10.0 wt% Sn,
and the rest being Cu and unavoidable impurities.

In a further embodiment, the Ni-Sn-Cu alloy may contain from 14.5 to 15.5 wt% Ni, from 7.5 to 8.5 wt% Sn,
and the rest being Cu and unavoidable impurities.

In a further embodiment, the Ni-Sn-Cu alloy may contain from 8.5 to 9.5 wt% Ni, from 0.05 to 0.3 wt% Mn, from 5.5 to 6.5 wt% Sn, and the rest being Cu and unavoidable impurities.

In one embodiment, the copper alloy may preferably be a Ni-Mn-Al-Cu alloy containing:
from 10.0 to 30.0 wt% Ni,
from 2.5 to 8.0 wt% Mn,
from 0.5 to 4.0 wt% Al,
from 0.0 to 1.5 wt% Fe,
from 0.0 to 1.5 wt% Nb,
and the rest being Cu and unavoidable impurities.

In a further embodiment, the Ni-Mn-Al-Cu alloy may contain from 13.5 to 16.5 wt% Ni, from 3.5 to 5.5 wt% Mn, from 1.0 to 2.0 wt% Al, from 0.0 to 1.0 wt% Fe, and the rest being Cu and unavoidable impurities.

In a further embodiment, the Ni-Mn-Al-Cu alloy may contain from 10.0 to 30.0 wt% Ni, from 4.0 to 6.0 wt% Mn, from 1.0 to 2.50 wt% Al, and the rest being Cu and unavoidable impurities.

In one embodiment, the copper alloy may preferably be a Ni-Cu alloy containing:
from 10.0 to 30.0 wt% Ni,
from 0.0 to 0.5 wt% Mn,
from 0.0 to 0.3 wt% Fe,
from 0.0 to 0.5 wt% Zn,
and the rest being Cu and unavoidable impurities.

In a further embodiment, the Ni-Cu alloy may contain from 23.0 to 26.0 wt% Ni, from 0.2 to 0.5 wt% Mn, from 0.1 to 0.2 wt% Fe, from 0.2 to 0.5 wt% Zn, and the rest being Cu and unavoidable impurities.

All copper alloys specified above have excellent corrosion resistance making them suitable for making tubes intended for use in tubes in marine environments, such as e.g. a submarine umbilical. They have further a yield limit of at least 400 MPa and they have excellent resistance towards hydrogen embrittlement.

The amount of material, i.e. the thickness of the tube wall, determined as the shortest distance between the inner and outer surface of the tube wall, may depend on several factors including the inner diameter of the tube, the expected physical and chemical loads/strains induced by the environment of the umbilical cable, use of an outer armouring layer and other factors. In the example embodiment where the tube wall is a single-layered monolithic object consisting of the hydrogen resistant material, the thickness of the tube wall (4) may in practice preferably be in the range of from 1.0 to 25.0 mm, more preferably of from 0.2 to 4.0 mm, more preferably of from 0.3 to 3.0 mm, more preferably of from 0.3 to 2.0 mm, and most preferably of from 5.0 to 10.0 mm.

In the example embodiment where the wall also comprises an outer layer, the thickness of the tube wall may in practice preferably be in the range of from 0.2 to 5.0 mm, preferably of from 0.2 to 4.0 mm, more preferably of from 0.3 to 3.0 mm, more preferably of from 0.3 to 2.0 mm, and most preferably of from 0.4 to 1.5 mm. The characterising part of the umbilical cable according to the invention is that the umbilical comprises at least one tube (3) having an tube wall (4) made of a hydrogen embrittlement resistant material. An especially preferred material for use as the tube wall material is a CuNiSi alloy as specified above.

CuNiSi-alloys can have suitable corrosion and mechanical properties for use as umbilical tubes for hydrogen transport. Ni and Si alloying elements added to a copper matrix followed by suitable heat treatment to cause precipitation hardening by the formation of Ni2Si precipitates in the Cu metal structure. This can create materials with strengths in excess of 500 MPa yield strength and completely unaffected by a hydrogen environment. Specifically, embrittlement which is known to affect high strength steel alloys and cause catastrophic failure. The material is also readably weldable- either prior to or after the heat treatment above. In this context Si forms oxides in the weld zone and reduces porosity in the weld, Si and Ni improves fluidity and weld microstructure, Ni provides solid solution strengthening in weld and base material, Ni increases thermal resistance to reduce geometrical distortion and reduces the heat affected zone when subjected to any welding process, and Ni increases reflectivity to improve autogenous laser welding.

It's understood that certain welding procedures can alternate the microstructure obtained by heat treatment. Combination of Ni and Si when subjected to a suited thermo-mechanical treatment provides strengthening precipitates. Furthermore, the addition of Fe and Mn to the CuNiSi alloy has the benefit of improved corrosion resistance from the Fe and the Mn acting as deoxidant. The CuSiNi alloy may be subject to a solution annealing at 800 - 1000 °C for 60 - 180 minutes to solve the Ni and Si content in the Cu matrix. It may further be quenched and aging-treated by heating it to a temperature of 400 - 500 °C for about 5 to 10 hours to precipitate Ni-Si causing hardening of the CuSiNi alloy.

In one embodiment, the tube wall (4) may be manufactured by rolling a precursor sheet into a tubular form and welding along the seam to make a sealed tubular structure. The manufacturing may be made continuous with or without an outer armouring. Alternatively, the tube can be extruded in shorter lengths followed by assembly by orbital welding to create longer continuous lengths.

The term "umbilical cable" as used herein encompasses any known or conceivable umbilical cable comprising at least one tubular element intended for transportation of hydrogen gas made of one of the alloys according to the first aspect of the invention. The umbilical will transport hydrogen and potentially electricity between offshore structures including subsea structures, or to and onshore structure. An umbilical cable usually comprises a bundle of one or more of electric conductors, fibre optic cables, electric signal cables, tubes etc. encapsulated by an over-sheath comprising an armouring and an outer polymer sheathing.

The term "electric conductor" as used herein refers to a current carrying cable. The umbilical may apply any known current carrying cable, including but not limited to a single strand of an electrically conductive material, a plurality of strands of an electrically conductive material arranged in a bunt, etc. In the latter case of applying an electric conductor comprising a bunt of strands, the space in-between the strands of electrically conductive material may be occupied by a semiconducting filler compound. The electric conductor may further comprise a semiconducting conductor screen arranged radially around and encompassing the single strand or bunt of strands. Examples of materials being suited as the current carrying strand(s) of the electric conductor of power cables include, but are not limited to; Cu, Cu-alloy, Al, or an Al-alloy. In practice, the electrically conductive material being applied as conductor(s) in power cables may advantageously have an electric conductivity of at least 4.8·10⁶ S/m at 20 °C, preferably of at least 1.0·10⁷ S/m at 20 °C and most preferably of at least 3.6·10⁷ S/m at 20 °C.

Each electric conductor of the umbilical should be individually electrically insulated. This is typically obtained by covering the surface of the conductor by a layer of an electric insulating material, i.e. to make the conductor being sheathed in the electrically insulating material. The invention may apply any known or conceivable material, including dielectric materials, known to the skilled person as being suited as insulation of the current carrying conductor(s) of power cables. In practice the electric conductivity of the material being applied as insulation may advantageously have an electric conductivity of less than 10⁻¹⁴ S/m at 20 °C, preferably less than 10⁻¹⁶ S/m at 20 °C, preferably less than 10⁻¹⁸ S/m at 20 °C, and most preferably less than 10⁻²⁰ S/m at 20 °C. Examples of materials suited for being applied to form the electric insulation of the conductor(s) include, but are not limited to; ethylene propylene rubber (EPR), ethylene propylene diene monomer (EDPM), rubber, polyethylene (EP), polypropylene (PP), polyurethane (PUR), cross-linked polyethylene (XLPE), and mass-impregnated (MI) paper. The insulation effect of the insulating material depends on the thickness of the layer of insulating material. In general, the higher voltage of the electric current in the conductor, the more insulation is needed. The determination of amount of insulating material required to electrically insulate a conductor is within the ordinary skills of the person skilled in the art.

Furthermore, the electric conductors and their electric insulation should be protected towards intrusion of water/moisture. An ingress of moisture into the core can lead to a failure of the cable. Thus, the inner sheathing of submarine power cables should be excellent water barriers able to completely block any intrusion of water and/or moisture to the conductor(s) and its(their) electric insulation for the duration of its design life. Furthermore, the inner sheathing of subsea cables should endure any movements imposed on the cable by wave motions, under water currents etc. without fatigue, unintended separation between the layers, cracking or any other mechanical breakdown destroying the water barrier function of the inner sheathing during the desired lifetime of the power cable, which may be many years. The inner sheathing may advantageously also function as an emergency earthing conductor leading eventual short circuit currents and/or eventual capacitive charging currents in the power cable to ground. I.e. there are rather stringent mechanical requirements imposed on the inner sheathing of power cables such that the inner sheathing is usually a metallic tube of sufficient diameter to house at least the electrically insulated conductor(s).

### List of figures

Figure 1a) is a cut-view drawing of a cross-section of an example embodiment of a tube according to the invention for transporting hydrogen.
Figure 1b) is a cut-view drawing of a cross-section of another example embodiment of a tube according to the invention for transporting hydrogen.
Figure 2 is a cut-view drawing of a cross-section of an example embodiment of an umbilical cable containing a tube according to the invention for transporting hydrogen.

### Example embodiment

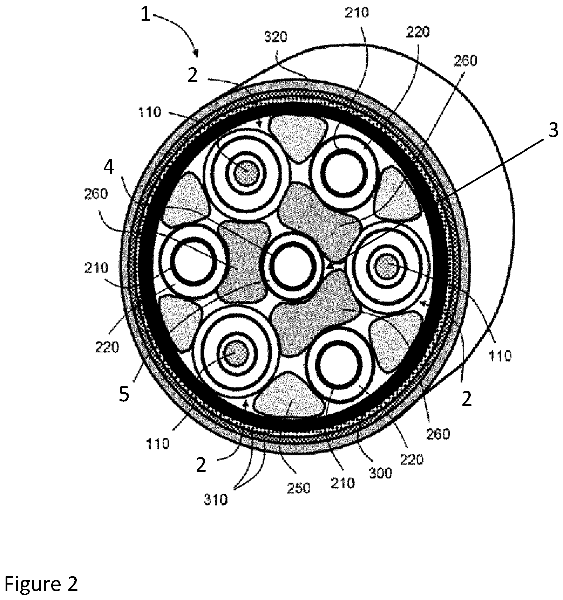

An example embodiment of a subsea power umbilical cable according to the invention for transporting electric power and hydrogen is presented in figure 2. The figure is a cut-view drawing of a cross-section of the umbilical cable (1). The power umbilical cable (1) comprises three electrical conductors (100), one centre tube (3), and three peripheral tubes (210, 220) distributed and held in place by profile elements (250, 260) of polyethylene. These elements fill the inner space inside an over-sheath comprising an armouring (310) of steel wires and an outer polyethylene sheathing (300).

The centre tube (3) of this example embodiment has a dual layered tube wall (4) where the inner layer is made of a CuSiNi alloy according to claim 6. The tube wall comprises further an outer steel armouring (5).

The electric conductors (100) comprises a polyethylene core element (110) having a layer of copper wires followed by a layer of semiconducting sheathing. These parts define the core of the conductor. Then follows a polymeric electric insulation layer, a semiconductive sheathing (60), a cupper-wrapping (70), and an outer polymeric electric insulation (80).

### References

1 "Hydrogen Transportation pipelines" European Industrial gases association, IGC Doc 121/04. Retrievable on the internet: https://h2tools.org/sites/default/files/Doc121_04%20H2TransportationPipelines.pdf
2 Ogawa et al., "Material performance of age-hardened beryllium-copper alloy, CDA-C17200, in a high-pressure, gaseous hydrogen environment", International Journal of Hydrogen Energy, Volume 42, Issue 26, 29 June 2017, Pages 16887-16900 https://doi.org/10.1016/j.ijhydene.2017.04.270
3 Yamabe et al., "High-strength copper-based alloy with excellent resistance to hydrogen embrittlement", International Journal of Hydrogen Energy, Volume 41, Issue 33, 7 September 2015, Pages 15089-15094, https://doi.org/10.1016/j.ijhydene.2016.05.156
4 Sudarshan et al., "Hydrogen and Humidity Effects of Fatigue Behaviour of a 70-30 Copper-Nickel alloy", J. Materials for energy systems, Vol. 8, No. 3, December 1986, pp. 291-296.

## Claims

1. An umbilical cable for transportation of electric power and hydrogen, **characterised in that** the umbilical cable (1) comprises:
an electric conductor (2), and
a tube (3) for transporting hydrogen having a tube wall (4) made of a material resistant to hydrogen embrittlement.

2. The umbilical cable according to claim 1, wherein the tube wall (4) is made of a material found resistant to hydrogen embrittlement according to ISO 11114-4:2017.

3. The umbilical cable according to claim 1 or 2, wherein the tube wall (4) is made of a copper alloy.

4. The umbilical cable according to any preceding claim, wherein the thickness of the tube wall (4) is in the range of from 1.0 to 25.0 mm, preferably of from 0.2 to 4.0 mm, more preferably of from 0.3 to 3.0 mm, more preferably of from 0.3 to 2.0 mm, and most preferably of from 5.0 to 10.0 mm.

5. The umbilical cable according to any preceding claim, wherein the tube wall (4) is made of a copper alloy containing:
from 1.0 to 30.0 wt% Ni,
from 0.0 to 5.0 wt% Si,
from 0.0 to 10.0 wt% Mn,
from 0.0 to 5.0 wt% Al,
from 0.0 to 1.5 wt% Fe,
from 0.0 to 1.0 wt% Mg,
from 0.0 to 1.0 wt% Zn,
from 0.0 to 1.0 wt% Co,
from 4.0 to 10.0 wt% Sn,
from 0.0 to 2.0 wt% Cr,
from 0.0 to 1.5 wt% Zr,
from 0.0 to 2.0 wt% Nb,
and the rest being Cu and unavoidable impurities.

6. The umbilical cable according to claim 5, wherein the copper alloy is a Ni-Si-Cu alloy containing
either:
from 1.0 to 10.0 wt% Ni, from 0.25 to 3.0 wt% Si, from 0.0 to 0.5 wt% Mn, from 0.0 to 0.5 wt% Mg, from 0.0 to 2.0 wt% Cr, from 0.0 to 2.0 wt% Co, and the rest being Cu and unavoidable impurities,
or:
from 6.0 to 8.0 wt% Ni, from 1.5 to 2.5 wt% Si, from 0.7 to 1.2 wt% Cr, and the rest being Cu and unavoidable impurities,
or:
from 2.2 to 4.2 wt% Ni, from 0.25 to 1.2 wt% Si, from 0.05 to 0.30 wt% Mg, and the rest being Cu and unavoidable impurities,
or:
from 1.0 to 5.0 wt% Ni, from 0.50 to 2.0 wt% Si, 0.1 wt% Mg, from 0.8 to 2.0 wt% Co, and the rest being Cu and unavoidable impurities,
or:
from 2.0 to 3.5 wt% Ni, from 0.3 to 0.7 wt% Si, and the rest being Cu and unavoidable impurities.

7. The umbilical cable according to claim 5, wherein the copper alloy is a Ni-Sn-Cu alloy containing
either:
from 5.0 to 20.0 wt% Ni, from 0.0 to 0.5 wt% Mn, from 4.0 to 10.0 wt% Sn, and the rest being Cu and unavoidable impurities,
or:
from 14.5 to 15.5 wt% Ni, from 7.5 to 8.5 wt% Sn, and the rest being Cu and unavoidable impurities,
or:
from 8.5 to 9.5 wt% Ni, from 0.05 to 0.3 wt% Mn, from 5.5 to 6.5 wt% Sn, and the rest being Cu and unavoidable impurities.

8. The umbilical cable according to claim 5, wherein the copper alloy is a Ni-Mn-Al-Cu alloy containing
either:
from 10.0 to 30.0 wt% Ni, from 2.5 to 8.0 wt% Mn, from 0.5 to 4.0 wt% Al, from 0.0 to 1.5 wt% Fe, from 0.0 to 1.5 wt% Nb, and the rest being Cu and unavoidable impurities,
or:
from 13.5 to 16.5 wt% Ni, from 3.5 to 5.5 wt% Mn, from 1.0 to 2.0 wt% Al, from 0.0 to 1.0 wt% Fe, and the rest being Cu and unavoidable impurities,
or:
from 10.0 to 30.0 wt% Ni, from 4.0 to 6.0 wt% Mn, from 1.0 to 2.50 wt% Al, the rest being Cu and unavoidable impurities.

9. The umbilical cable according to claim 5, wherein the copper alloy is a Ni-Cu alloy containing
either:
from 10.0 to 30.0 wt% Ni, from 0.0 to 0.5 wt% Mn, from 0.0 to 0.3 wt% Fe, from 0.0 to 0.5 wt% Zn, and the rest being Cu and unavoidable impurities,
or:
from 23.0 to 26.0 wt% Ni, from 0.2 to 0.5 wt% Mn, from 0.1 to 0.2 wt% Fe, from 0.2 to 0.5 wt% Zn, and the rest being Cu and unavoidable impurities.

10. The umbilical cable according to any of claims 1 to 3, wherein the tube wall (4) is made of one of the following materials: a 25Cr-6Mo-5Ni duplex stainless steel; an austenitic stainless steel, preferably a steel classified as the 200 or 300 series according to the American Iron and Steel Institute, and most preferably a 316 steel.

11. The umbilical cable according to any of claims 1 to 3, wherein the tube wall (4) is made of an aluminium alloy, preferably a wrought alloy from the AAlxxx through AA7xxx series according to the Aluminium Association Standard.

12. The umbilical cable according to any of claims 1 to 3, wherein the tube wall (4) is made of a polymer-liner, preferably high-density polyethylene.

13. The umbilical cable according to any preceding claim, wherein the tube (3) further comprises a sheathing/over-layer in the form of a coaxial tube overlaying the tube (3), a pressure armouring or transversal armouring made of stainless steel laid onto the tube wall (4).

14. The umbilical cable according to claim 13, wherein the thickness of the tube wall (4) is in the range of from 0.2 to 5.0 mm, preferably of from 0.2 to 4.0 mm, more preferably of from 0.3 to 3.0 mm, more preferably of from 0.3 to 2.0 mm, and most preferably of from 0.4 to 1.5 mm.

15. The umbilical cable according to claim 1, wherein the tube wall (4) is a dual-layered wall and where the inner layer of the tube wall is made of a material resistant to hydrogen embrittlement according to any of claims 3 to 12.

16. The umbilical cable according to any of preceding claim, wherein the umbilical cable further comprises one or more of fibre optic cables, electric signal cables, tubes for transferring pneumatic fluids, tubes for transferring air or other gases, and where the umbilical cable further comprises an over-sheath comprising an armouring and an outer polymer sheathing.
